# EUROPÄISCHE PATENTANMELDUNG

(11) **EP 4 848 841 A1**
(43) Veröffentlichungstag der Anmeldung: **02.12.2026**
(21) Anmeldenummer: 26178094.4
(22) Anmeldetag: 12.05.2026
(51) Int. Cl.: H04W 56/00, H04W 76/00, H04W 88/00

(54) **VERFAHREN ZUR VERBESSERUNG DER ZEITGENAUIGKEIT BEI DER DRAHTLOSÜBERTRAGUNG ZWISCHEN EINEM KNOTEN UND EINER BASISSTATION IN EINEM KOMMUNIKATIONSSYSTEM, KNOTEN, UND KOMMUNIKATIONSSYSTEM**

(30) Priorität: 28.05.2025 DE 102025121155
(71) Anmelder: Diehl Metering Systems GmbH, 90451 Nürnberg (DE)
(72) Erfinder: Petkov, Hristo, 90411 Nürnberg (DE)
(74) Vertreter: Diehl Patentabteilung

(57) **Zusammenfassung**

Verfahren zur Verbesserung der Zeitgenauigkeit bei der Drahtlosübertragung zwischen einem Knoten (K) und einer Basisstation (B) in einem Kommunikationssystem (KS), umfassend die Schritte
- Übertragen eines ersten Datenpakets (Pᵥ) zwischen dem Knoten (K) und der Basisstation (B);
- Erzeugen von Hochfrequenz-Takten (T_{HF}) während einer ersten Zeitdauer t₁ durch einen Hochfrequenz-Taktgeber (HF), der eine Nennfrequenz f_{HF} aufweist;
- Erzeugen von Niederfrequenz-Takten (T_{NF}) während einer zweiten Zeitdauer t₂, die länger ist als die erste Zeitdauer t₁, durch einen Niederfrequenz-Taktgeber (NF), der eine Nennfrequenz f_{NF} aufweist, die kleiner ist als die Nennfrequenz f_{HF} des Hochfrequenz-Taktgebers (HF);
- Registrieren der erzeugten Niederfrequenz-Takte (T_{NF}) und Hochfrequenz-Takte (T_{HF}) durch den Knoten (K) oder durch die Basisstation (B);
- Bestimmen einer Taktkorrektur auf der Grundlage der registrierten Niederfrequenz-Takte (T_{NF}) und/oder Hochfrequenz-Takte (T_{HF});
- Bestimmen einer Übertragungszeit, insbesondere Sendezeit und/oder Empfangszeit, auf der Grundlage der bestimmten Taktkorrektur.

## Beschreibung

Die Erfindung betrifft ein Verfahren zur Verbesserung der Zeitgenauigkeit bei der Drahtlosübertragung zwischen einem Knoten und einer Basisstation in einem Kommunikationssystem, ferner einen Knoten, und ferner ein Kommunikationssystem.

### Stand der Technik

Es sind verschiedene Verfahren zur Übertragung von Daten zwischen einem oder mehreren Knoten und einer Basisstation in einem Kommunikationssystem bekannt. Auf dem für die vorliegende Erfindung besonders relevantem Gebiet des Internets der Dinge (IoT) haben sich insbesondere Niedrigenergieweitverkehrnetze (engl.: Low Power Wide Area Network; kurz: LPWAN) als drahtlose Netzwerklösung etabliert. Ein Beispiel hierfür ist die unter der Wortmarke "MIOTY" bekannte Technologie, welche eine industriegeeignete Konnektivität für das loT bereitstellt.

Die Knoten können dabei beispielsweise intelligente Verbrauchsmessgeräte sein, die in Wohnhäusern angeordnet sind und Messdaten erfassen. Die Daten der Knoten werden per Funk durch eine ortsfeste oder mobile Basisstation (auch Datensammler oder Gateway genannt) zu bestimmten Übertragungszeiten übertragen. Die Basisstation empfängt dabei die Funksignale der Knoten innerhalb ihres Empfangsbereichs. In vielen Anwendungen, wie beispielsweise der Telemetrie, senden dann ausschließlich die Knoten. Andere Anwendungen erfordern jedoch auch eine Fernsteuerung der Knoten. Daher können auch die Knoten derart eingerichtet sein, um von der Basisstation gesendete Daten zu empfangen. Beides wird als Übertragung von Daten zwischen Knoten und Basisstation verstanden.

Sind die Übertragungszeiten für die Übertragung der Daten ungenau bestimmt bzw. geschätzt bzw. nicht ausreichend korrigiert, kann dies zu einer schlechten Übertragung, insbesondere einem schlechtem Empfang auf Seiten des Knotens und/oder der Basisstation führen. Deshalb sind möglichst genaue Übertragungszeiten wichtig, um eine gute und zuverlässige Übertragung zu gewährleisten.

Bekannte Verfahren verwenden Quarze als Taktgeber zur Bestimmung der Übertragungszeiten, insbesondere der Sendezeit und/oder der Empfangszeit. Diese Quarze leiden jedoch unter Abweichungen bzw. Toleranzen ihrer Nennfrequenz mit der sie Takte erzeugen. Dieser Effekt ist insbesondere bei anhaltenden Temperaturschwankungen, denen der Quarz ständig ausgesetzt ist, stärker ausgeprägt. Dies führt zu einer ungewollten Frequenzabweichung, die in der Folge zu einem ungewollten Zeitfehler bei der Bestimmung der Übertragungszeiten führt. Unter den dadurch ungenauen Übertragungszeiten leidet dann die Übertragungsqualität zwischen dem Knoten und der Basisstation.

### Aufgabe der vorliegenden Erfindung

Es ist die Aufgabe der vorliegenden Erfindung die Nachteile aus dem Stand der Technik zu überwinden, indem ein Verfahren zur Verbesserung der Zeitgenauigkeit bei der Drahtlosübertragung zwischen einem Knoten und einer Basisstation in einem Kommunikationssystem, sowie ein verbesserter Knoten, sowie ein verbessertes Kommunikationssystem bereitgestellt werden.

### Lösung der Aufgabe

Diese Aufgabe wird durch das Verfahren gemäß Anspruch 1, den Knoten gemäß Anspruch 19, und das Kommunikationssystem gemäß Anspruch 25 gelöst. Vorteilhafte Aspekte der Erfindung sind der Gegenstand der abhängigen Ansprüche.

### Beschreibung der Erfindung anhand von Ausführungsbeispielen

Die Erfindung umfasst ein Verfahren zur Verbesserung der Zeitgenauigkeit bei der Drahtlosübertragung (bevorzugt der Drahtlosübertragung eines nachfolgenden Datenpakets) zwischen einem Knoten und einer Basisstation in einem Kommunikationssystem, bevorzugt in einem Niedrigenergieweitverkehrnetz, umfassend die Schritte
- Übertragen eines ersten Datenpakets (bevorzugt eines dem nachfolgenden Datenpaket vorangehenden Datenpakets) zwischen dem Knoten und der Basisstation;
- Erzeugen von Hochfrequenz-Takten während einer ersten Zeitdauer t₁ durch einen Hochfrequenz-Taktgeber, der eine Nennfrequenz f_{HF} aufweist;
- Erzeugen von Niederfrequenz-Takten während einer zweiten Zeitdauer t₂, die länger ist als die erste Zeitdauer t₁, durch einen Niederfrequenz-Taktgeber, der eine Nennfrequenz f_{NF} aufweist, die kleiner ist als die Nennfrequenz f_{HF} des Hochfrequenz-Taktgebers;
- Registrieren der erzeugten Niederfrequenz-Takte und Hochfrequenz-Takte durch den Knoten oder durch die Basisstation;
- Bestimmen einer Taktkorrektur auf der Grundlage der (bevorzugt vom Knoten) registrierten Niederfrequenz-Takte und/oder Hochfrequenz-Takte;
- Bestimmen einer Übertragungszeit, insbesondere Sendezeit und/oder Empfangszeit, auf der Grundlage der bestimmten Taktkorrektur.

Die Übertragungszeit ist in einem weiten Sinne zu verstehen, insbesondere als Sendezeit und/oder Empfangszeit. Die Übertragungszeit kann Zeitpunkte und/oder Zeitdauern umfassen. Beispielsweise kann sich die Übertragungszeit auch zusammensetzen aus einem Anfangszeitpunkt und einem Endzeitpunkt oder aus einem Anfangszeitpunkt und einer Übertragungsdauer. Die Übertragungszeit ist geeignet ein Übertragungszeitfenster festzulegen, innerhalb dessen das Übertragen, insbesondere das Empfangen und/oder Senden, eines Datenpakets zwischen dem Knoten und der Basisstation stattfindet.

Das Bestimmen der Taktkorrektur auf der Grundlage der vom Knoten registrierten Niederfrequenz-Takte und Hochfrequenz-Takte kann erfolgen, indem die Anzahlen der registrierten Niederfrequenz-Takte und Hochfrequenz-Takte verglichen werden. Das Bestimmen der Taktkorrektur auf der Grundlage der vom Knoten registrierten Niederfrequenz-Takte kann erfolgen, indem die Anzahl der registrierten Niederfrequenz-Takte mit einer Anzahl von auf Grund der bekannten Nennfrequenz f_{NF} erwarteten Soll-Takten verglichen wird. Dabei gilt für die Anzahl N_{HF} der während der ersten Zeitdauer t₁ vom Hochfrequenz-Taktgeber erzeugter Takte N_{HF} = t₁ × (f_{HF} + Δf_{HF}), wobei Δf_{HF} eine (möglicherweise zeitabhängige) Frequenzabweichung des Hochfrequenz-Taktgebers von seiner Nennfrequenz f_{HF} ist. Für die Anzahl N_{NF} der während der zweiten Zeitdauer t₂ vom Niederfrequenz-Taktgeber erzeugter Takte gilt entsprechend N_{NF} = t₂ × (f_{NF} + Δf_{NF}), wobei Δf_{NF} eine (möglicherweise zeitabhängige) Frequenzabweichung des Niederfrequenz-Taktgebers von seiner Nennfrequenz f_{NF} ist. Die Frequenzabweichungen Δf_{HF} und Δf_{NF} werden beispielsweise durch Fertigungstoleranzen der Taktgeber oder durch äußere Einflüsse, wie eine sich zeitlich ändernde Temperatur der Taktgeber, hervorgerufen. Es können nur ganzzahlige Veränderungen der Taktanzahl registriert werden. Indem die zweite Zeitdauer t₂ länger gewählt ist, kann eine Frequenzabweichungen Δf_{NF} eher detektiert und eine Taktkorrektur zuverlässiger bestimmt werden.

Das Bestimmen der Übertragungszeit auf der Grundlage der registrierten Taktkorrektur kann erfolgen, indem anhand der Anzahl der registrierten Hochfrequenz-Takte und/oder Niederfrequenz-Takte, vorzugsweise nur anhand der Anzahl der registrierten Niederfrequenz-Takte, die Übertragungszeit angepasst wird. Beispielsweise können der Anfangszeitpunkt und/oder der Endzeitpunkt der Übertragung des nachfolgenden Datenpakets auf Grundlage der Anzahl N_{NF} der während der zweiten Zeitdauer t₂ vom Niederfrequenz-Taktgeber erzeugter Takte verschoben werden.

Auf Grundlage der erzeugten Hochfrequenz-Takte des Hochfrequenz-Taktgebers kann das Bestimmen einer Trägerfrequenz für das Übertragen der Datenpakete erfolgen.

Ein vorteilhafter Aspekt sieht vor, dass das erste Datenpaket ein einem nachfolgenden Datenpaket vorangehendes Datenpaket ist, und wobei das Verfahren ferner den Schritt umfasst:
- Übertragen des nachfolgenden Datenpakets zwischen dem Knoten und der Basisstation auf Grundlage der bestimmten Übertragungszeit.

Das vorangehende Datenpaket und das nachfolgende Datenpaket können unmittelbar zeitlich aufeinanderfolgend übertragene Datenpakete sein oder es können zwischen dem vorangehenden Datenpaket und dem nachfolgende Datenpaket weitere Datenpakete übertragen worden sein. Das Verfahren kann sich in beliebig vielen Zyklen wiederholen. Dabei kann das nachfolgende Datenpaket eines vorangehenden Zyklus das vorangehende Datenpaket eines nachfolgenden Zyklus darstellen.

Ein vorteilhafter Aspekt sieht vor, dass das Bestimmen der Übertragungszeit vor dem Übertragen des nachfolgenden Datenpakets erfolgt. Dadurch kann besonders präzise ein Anfangszeitpunkt der Übertragungszeit des nachfolgenden Datenpakets bestimmt werden.

Ein vorteilhafter Aspekt sieht vor, dass das Bestimmen der Übertragungszeit während dem Übertragen des nachfolgenden Datenpakets erfolgt. Dies ist besonders vorteilhaft, wenn der Knoten für das Übertragen des nachfolgenden Datenpakets aus einem Schlafmodus geweckt werden muss und das Wecken aus dem Schlafmodus zu einem Anfangszeitpunkt der Übertragungszeit des nachfolgenden Datenpakets erfolgt. Durch Bestimmen der Übertragungszeit während dem Übertragen des nachfolgenden Datenpakets kann dann besonders eine Übertragungsdauer der Übertragungszeit angepasst werden.

Ein vorteilhafter Aspekt sieht vor, dass die zweite Zeitdauer t₂ zumindest der Dauer zwischen dem Übertragen des ersten Datenpakets und dem Übertragen des nachfolgenden Datenpakets entspricht. Dieser Aspekt wirkt sich besonders dann vorteilhaft aus, wenn die Dauer zwischen dem Übertragen des vorangehenden Datenpakets und dem Übertragen des nachfolgenden Datenpakets, insbesondere zwischen dem Endzeitpunkt des Übertragens des vorangehenden Datenpakets und dem Anfangszeitpunkt des Übertragens des nachfolgenden Datenpakets, länger ist, als die Dauer des Übertragens des vorangehenden Datenpakets. Dann können noch kleinere Frequenzabweichung Δf_{NF} des Niederfrequenz-Taktgebers von seiner Nennfrequenz f_{NF} beim Bestimmen der Taktkorrektur berücksichtigt werden.

Ein vorteilhafter Aspekt sieht vor, dass die zweite Zeitdauer t₂ zumindest der Summe entspricht aus
- der Dauer des Übertragens des ersten Datenpakets; und
- der Dauer zwischen dem Übertragen des ersten Datenpakets und dem Übertragen des nachfolgenden Datenpakets.

Ein vorteilhafter Aspekt sieht vor, dass die zweite Zeitdauer t₂ länger ist als die Dauer des Übertragens des ersten Datenpakets. Dieser Aspekt wirkt sich besonders dann vorteilhaft aus, wenn die Dauer des Übertragens des ersten Datenpakets derart kurz ist, dass eine Frequenzabweichung Δf_{NF} des Niederfrequenz-Taktgebers von seiner Nennfrequenz f_{NF} sich in dieser Zeitdauer nicht in einer veränderten Anzahl N_{NF} registrierter Niederfrequenz-Takte niederschlägt.

Ein vorteilhafter Aspekt sieht vor, dass die zweite Zeitdauer t₂ länger ist als ein 10-faches, bevorzugt ein 100-faches, besonders bevorzugt ein 1000-faches der Dauer des Übertragens des ersten Datenpakets. Hierdurch können noch kleinere Frequenzabweichung Δf_{NF} des Niederfrequenz-Taktgebers von seiner Nennfrequenz f_{NF} beim Bestimmen der Taktkorrektur berücksichtigt werden.

Ein vorteilhafter Aspekt sieht vor, dass die zweite Zeitdauer t₂ zumindest derart lang ist, sodass t₂ ≥ (Δf_{NF} × f_{NF})⁻¹, wobei Δf_{NF} = 10 ppm × f_{NF}, bevorzugt Δf_{NF} = 5 ppm × f_{NF}, bevorzugter Δf_{NF} = 2 ppm × f_{NF}, besonders bevorzugt Δf_{NF} = 1 ppm × f_{NF}. Damit können derart kleine Frequenzabweichung Δf_{NF} des Niederfrequenz-Taktgebers von seiner Nennfrequenz f_{NF} beim Bestimmen der Taktkorrektur berücksichtigt werden.

Ein vorteilhafter Aspekt sieht vor, dass die erste Zeitdauer t₁ (maximal) der Dauer des Übertragens des ersten Datenpakets entspricht. Das Erzeugen der Hochfrequenz-Takte benötigt Energie, beispielsweise in Form von elektrischem Strom. Indem die erste Zeitdauer t₁ für das Erzeugen der Hochfrequenz-Takte der Dauer des Übertragens des ersten Datenpakets entspricht, werden keine Hochfrequenz-Takte zwischen dem Übertragen des ersten Datenpakets und dem Übertragen des nachfolgenden Datenpakets erzeugt. Der Hochfrequenz-Taktgeber muss daher nicht durchgehend aktiv sein. Damit ist das Verfahren besonders energieeffizient.

Ein vorteilhafter Aspekt sieht vor, dass das Übertragen der Datenpakete zwischen dem Knoten und der Basisstation auf einem vorgegebenen Primär-Frequenzband erfolgt, welches eine Bandbreite ≤ 500 kHz, bevorzugt ≤ 250 kHz, besonders bevorzugt ≤ 125 kHz, aufweist.

Ein vorteilhafter Aspekt sieht vor, dass das Bestimmen der Taktkorrektur auf der Grundlage eines Vergleichens der vom Knoten registrierten Niederfrequenz-Takte und Hochfrequenz-Takte erfolgt, durch welches Vergleichen eine Taktabweichung der Niederfrequenz-Takte bestimmt wird.

Ein vorteilhafter Aspekt sieht vor, dass das Bestimmen einer Übertragungszeit umfasst, dass die Frequenz, mit der der Niederfrequenz-Taktgeber Niederfrequenz-Takte erzeugt, auf der Grundlage der bestimmten Taktkorrektur angepasst wird.

Ein vorteilhafter Aspekt sieht vor, dass das Bestimmen der Übertragungszeit eine Verschiebung eines Anfangszeitpunkts und/oder Endzeitpunkts der Übertragungszeit, insbesondere eines Anfangszeitpunkts und/oder Endzeitpunkts der Sendezeit und/oder Empfangszeit, auf der Grundlage der bestimmten Taktkorrektur umfasst.

Ein vorteilhafter Aspekt sieht vor, dass das vorangehende Datenpaket und das nachfolgende Datenpaket aufeinanderfolgende Sub-Datenpakete eines in Sub-Datenpakete unterteilten Telegramms sind.

Ein vorteilhafter Aspekt sieht vor, dass das vorangehende Datenpaket ein letztes Sub-Datenpaket eines in Sub-Datenpakete unterteilten vorangehenden Telegramms ist und das nachfolgende Datenpaket ein erstes Sub-Datenpaket eines in Sub-Datenpakete unterteilten und dem vorangehenden Telegramm nachfolgenden Telegramms ist.

Ein vorteilhafter Aspekt sieht vor, dass jedem der Sub-Datenpakete eine Übertragungsfrequenz innerhalb eines vorgegebenen Primär-Frequenzbands zugeordnet ist und jedes der Sub-Datenpakete mit der ihm jeweils zugeordneten Übertragungsfrequenz übertragen wird.

Bezogen auf die drei zuvor genannten vorteilhaften Aspekte kann das Unterteilen eines Telegramms in Sub-Datenpakete beispielsweise auf Grundlage des sog. Telegram Splittings (auch Telegram Splitting Multiple Access oder Telegram Splitting Ultra Narrowband genannt) erfolgen, wie es beispielsweise in dem Kommunikationsprotokoll gemäß ETSI-Standard TS 103 357 oder der o.g. Kommunikationstechnologie MIOTY implementiert ist. Das Aufteilen eines Telegramms in Sub-Datenpakete und das Übertragen der Sub-Datenpakete zu verschiedenen Übertragungszeiten und gegebenenfalls mit den Sub-Datenpaketen jeweils zugeordneten Übertragungsfrequenzen macht das Übertragen besonders robust gegenüber Störungen, wie sie etwa durch Interferenz mit anderen Funknetzen entstehen können. Telegram Splitting funktioniert sowohl für eine unidirektionale als auch eine bidirektionale Übertragung von Datenpaketen zwischen der Basisstation und dem Knoten, also sowohl für die als Uplink bezeichnete Übertragungsrichtung vom Knoten zur Basisstation als auch für die als Downlink bezeichnete Übertragungsrichtung von der Basisstation zum Knoten.

Ein vorteilhafter Aspekt sieht vor, dass das vorangehende Datenpaket und das nachfolgende Datenpaket jeweils mit einer sich zeitlich (kontinuierlich) ändernden Übertragungsfrequenz innerhalb eines vorgegebenen Primär-Frequenzbands übertragen werden. Damit kann das Übertragen über die sog. Chirp Spread Spectrum (CSS) Technologie erfolgen, wie sie beispielsweise bei dem Kommunikationsprotokoll LoRa eingesetzt wird.

Die Erfindung umfasst ferner einen Knoten zur Übertragung von Datenpaketen mit einer Basisstation in einem Kommunikationssystem, umfassend
- ein Funkmodul zur Übertragung der Datenpakete;
- eine Recheneinheit, die angepasst ist zum
   - Registrieren von Niederfrequenz-Takten und Hochfrequenz-Takten;
   - Bestimmen einer Taktkorrektur auf der Grundlage der registrierten Niederfrequenz-Takte und/oder Hochfrequenz-Takte;
   - Bestimmen einer Übertragungszeit, insbesondere Sendezeit und/oder Empfangszeit, auf der Grundlage der bestimmten Taktkorrektur;
   - Steuern des Funkmoduls derart, dass ein Übertragen (zumindest) eines der Datenpakete zu der bestimmten Übertragungszeit, insbesondere an einem bestimmten Zeitpunkt zum Senden und/oder Empfangen, erfolgt.

Der Knoten ist damit derart eingerichtet, sodass das Übertragen der Datenpakete während besonders präzise bestimmter Übertragungszeiten erfolgen kann. Damit kann der Knoten auch nur zu genau passend bestimmten Übertragungszeit übertragungsbereit sein, während er außerhalb dieser Übertragungszeit in einen Schlafmodus wechseln kann, in dem nur wenige Komponenten aktiv sind, um so den Energieverbrauch des Knotens herabzusenken. Ferner kann der Knoten ein (intelligentes) Verbrauchsmessgerät sein und die Datenpakete können dabei Sensordaten umfassen.

Ein vorteilhafter Aspekt sieht vor, dass der Knoten ein Computerprogramm umfasst, welches Befehle umfasst, die bei der Ausführung des Computerprogramms durch die Recheneinheit des Knotens die Recheneinheit veranlassen
- Niederfrequenz-Takte und Hochfrequenz-Takte zu registrieren;
- auf der Grundlage der registrierten Niederfrequenz-Takte und/oder Hochfrequenz-Takte eine Taktkorrektur zu bestimmen;
- auf der Grundlage der bestimmten Taktkorrektur eine Übertragungszeit, insbesondere Sendezeit und/oder Empfangszeit, zu bestimmen;
- das Funkmodul des Knotens derart zu steuern, dass ein Übertragen eines Datenpakets zu der bestimmten Übertragungszeit, insbesondere an einem bestimmten Zeitpunkt zum Senden und/oder Empfangen, erfolgt.

Ein vorteilhafter Aspekt sieht vor, dass der Knoten ferner umfasst
- einen Hochfrequenz-Taktgeber zur Erzeugung von Hochfrequenz-Takten, welcher Hochfrequenz-Taktgeber eine Nennfrequenz f_{HF} aufweist;
- einen Niederfrequenz-Taktgeber zur Erzeugung von Niederfrequenz-Takten, welcher Niederfrequenz-Taktgeber eine Nennfrequenz f_{NF} aufweist, die kleiner ist als die Nennfrequenz f_{HF} des Hochfrequenz-Taktgebers.

Der Hochfrequenz-Taktgeber und der Niederfrequenz-Taktgeber können dabei jeweils einen Quarzoszillator umfassen. Die Nennfrequenz f_{HF} des Hochfrequenz-Taktgebers kann dabei im Bereich von Megahertz (MHz), insbesondere einigen zehn MHz, beispielsweise 39 MHz, liegen. Die Nennfrequenz f_{NF} des Niederfrequenz-Taktgebers kann dabei im Bereich von Kilohertz (kHz), insbesondere einigen zehn kHz, beispielsweise 32,768 kHz, liegen. Die Frequenzen des Hochfrequenz-Taktgebers und/oder des Niederfrequenz-Taktgebers können temperaturabhängig sein, wobei der Niederfrequenz-Taktgeber eine stärkere Temperaturabhängigkeit als der Hochfrequenz-Taktgeber aufweisen kann.

Ein vorteilhafter Aspekt sieht vor, dass der Knoten eingerichtet ist zum Ausführen des Verfahrens wie vorstehend beschrieben.

Ein vorteilhafter Aspekt sieht vor, dass die Recheneinheit ferner angepasst ist zum Unterteilen von Telegrammen in Sub-Datenpakete. Das Unterteilen eines Telegramms in Sub-Datenpakete kann beispielsweise auf Grundlage des o.g. Telegram Splittings erfolgen.

Ein vorteilhafter Aspekt sieht vor, dass die Recheneinheit ferner angepasst ist, um jedem der Sub-Datenpakete eine Übertragungsfrequenz innerhalb eines vorgegebenen Primär-Frequenzbands zuzuordnen. Das Primär-Frequenzband kann dabei eine Bandbreite ≤ 500 kHz, bevorzugt ≤ 250 kHz, besonders bevorzugt ≤ 125 kHz, aufweisen.

Ein vorteilhafter Aspekt sieht vor, dass der Knoten batteriebetrieben ist. Für batteriebetriebene Knoten sind präzise bestimmte Übertragungszeiten besonders wichtig, um ohne Einbuße der Übertragungsqualität möglichst lange in einen Schlafmodus wechseln zu können, in dem keine Datenpakete übertragen werden.

Die Erfindung umfasst ferner ein Kommunikationssystem umfassend eine Basisstation und zumindest einen Knoten wie vorstehend beschrieben. Das Kommunikationssystem kann dabei ein Niedrigenergieweitverkehrnetz sein.

Im Folgenden wird die Erfindung anhand von Figuren näher erläutert. Dabei zeigen:
- Fig. 1: eine schematische Darstellung eines Kommunikationssystems mit einer Basisstation und drei Knoten, wobei zwischen der Basisstation und den Knoten Datenpakete übertragen werden;
- Fig. 2: eine schematische Darstellung eines batteriebetrieben Knotens aus Fig. 1;
- Fig. 3: ein schematisches Diagramm der Drahtlosübertragung zwischen dem Knoten aus Fig. 1 und 2 und der Basisstation aus Fig. 1.

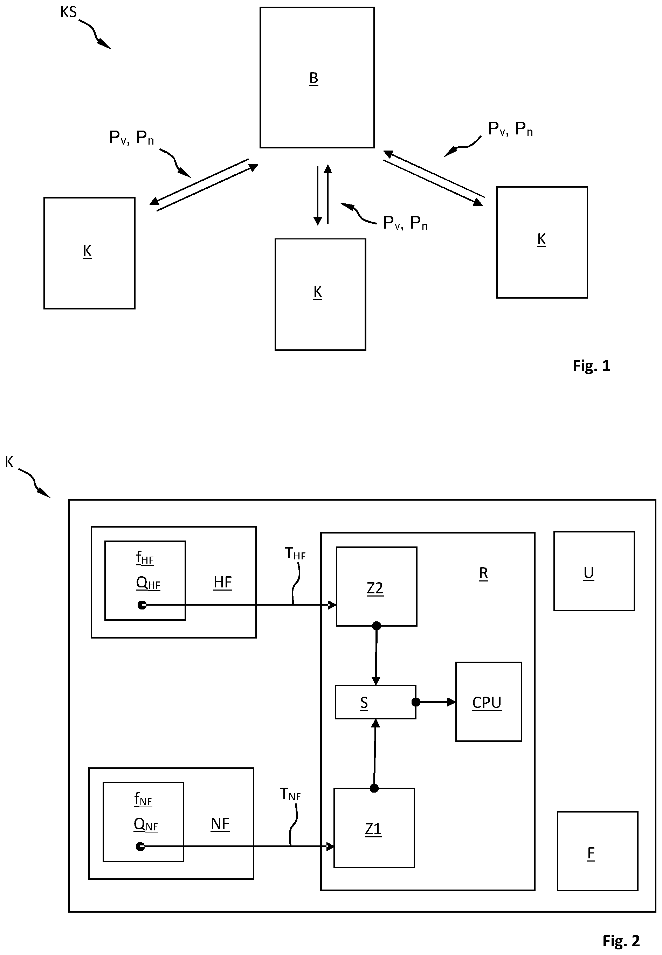

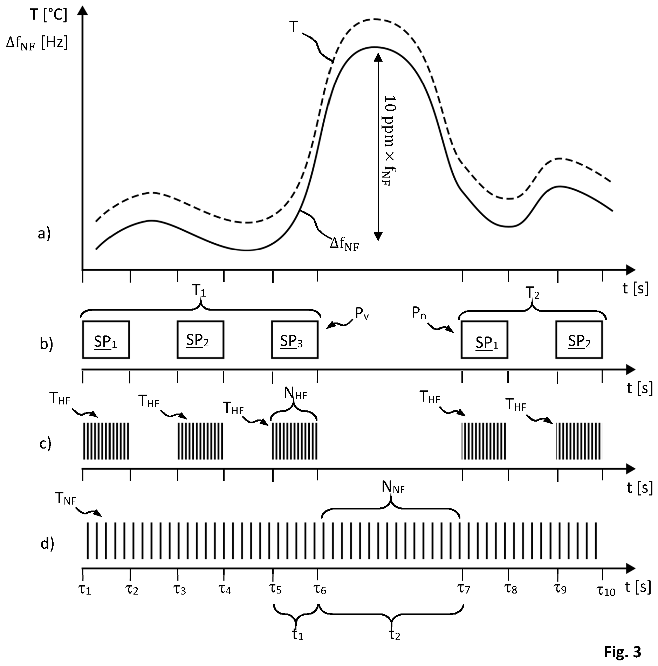

Fig. 1 zeigt eine schematische Darstellung eines Kommunikationssystems KS mit einer Basisstation B und drei identischen Knoten K, wobei zwischen der Basisstation B und den Knoten K Datenpakete Pᵥ, Pₙ übertragen werden. Dabei folgt auf die Übertragung eines vorangehenden (ersten) Datenpakets Pᵥ jeweils die Übertragung eines nachfolgenden Datenpakets Pₙ (vgl. Fig. 3). Das Übertragen kann sich in beliebig vielen Zyklen wiederholen. Dabei kann das nachfolgende Datenpaket Pₙ eines vorangehenden Zyklus das vorangehende Datenpaket Pᵥ eines nachfolgenden Zyklus darstellen. Alle Knoten K dieses Kommunikationssystems KS sind jeweils intelligente Verbrauchsmessgeräte und die Datenpakete Pᵥ, Pₙ umfassen daher Sensordaten.

Fig. 2 zeigt eine schematische Darstellung eines batteriebetrieben Knotens K aus Fig. 1. Der Knoten K umfasst einen Hochfrequenz-Taktgeber HF mit einem Hochfrequenz-Quarzoszillator Q_{HF} mit einer Nennfrequenz f_{HF} = 39 MHz und einen Niederfrequenz-Taktgeber NF mit einem Niederfrequenz-Quarzoszillator Q_{NF} mit einer Nennfrequenz f_{NF} = 32,768 kHz. In diesem Beispiel sind die tatsächlichen Frequenzen des Hochfrequenz-Taktgebers HF und des Niederfrequenz-Taktgebers NF temperaturabhängig, wobei der Niederfrequenz-Taktgeber NF eine deutlich stärkere Temperaturabhängig als der Hochfrequenz-Taktgeber HF aufweist. Beispielsweise zeigt der Niederfrequenz-Taktgeber NF eine Frequenzabweichung Δf_{NF} in Höhe von 10 ppm von seiner Nennfrequenz f_{NF}.

Ferner umfasst der Knoten K eine Recheneinheit R, eine Batterie U und ein Funkmodul F zur bidirektionalen drahtlosen Datenübertragung. Die Recheneinheit R umfasst einen Speicher S, eine CPU (Prozessor), einen ersten Timer Z1 und einen zweiten Timer Z2, beispielsweise jeweils 32 Bit Timer. Die Recheneinheit R ist angepasst zum
- Registrieren der Niederfrequenz-Takte T_{NF} durch den ersten Timer Z1 und der Hochfrequenz-Takte T_{HF} durch den zweiten Timer Z2, wobei die registrierten Niederfrequenz-Takte T_{NF} und Hochfrequenz-Takte T_{HF} in dem Speicher S zumindest temporär gespeichert werden;
- Bestimmen einer Taktkorrektur durch die CPU auf der Grundlage der registrierten Niederfrequenz-Takte T_{NF} und Hochfrequenz-Takte T_{HF};
- Bestimmen einer Übertragungszeit durch die CPU auf der Grundlage der bestimmten Taktkorrektur;
- Steuern des Funkmoduls F derart, dass ein Übertragen zumindest eines der Datenpakete Pᵥ, Pₙ während der bestimmten Übertragungszeit erfolgt.

Dafür umfasst der Knoten K ein Computerprogramm, welches Befehle umfasst, die bei der Ausführung des Computerprogramms durch die Recheneinheit R des Knotens K die Recheneinheit R veranlassen
- in dem Speicher S gespeicherte Niederfrequenz-Takte T_{NF} und Hochfrequenz-Takte T_{HF} zu laden;
- durch Vergleich der Niederfrequenz-Takte T_{NF} und Hochfrequenz-Takte T_{HF} eine Taktkorrektur zu bestimmen;
- auf der Grundlage der bestimmten Taktkorrektur eine Übertragungszeit zu bestimmen;
- das Funkmodul F des Knotens K derart zu steuern, dass ein Übertragen eines Datenpakets Pᵥ, Pₙ während der bestimmten Übertragungszeit erfolgt.

In dem gezeigten Beispiel inkrementiert der erste Timer Z1 bei jedem Takt des Niederfrequenz-Taktgebers NF den Wert eines ersten Zählers und der zweite Timer Z2 inkrementiert bei jedem Takt des Hochfrequenz-Taktgebers HF den Wert eines zweiten Zählers. Die Bestimmung der Taktkorrektur kann dann beispielsweise wie folgt erfolgen. Wird ein vorangehendes Datenpaket Pᵥ während einer Übertragungszeit von 10 ms übertragen, so erzeugt der Hochfrequenz-Taktgeber HF in dieser Zeit 390.000 Hochfrequenz-Takte T_{HF}, die der erste Zähler des ersten Timers Z1 registriert. Vergeht eine Wartezeit von 10 s bis zur Übertragung des nachfolgenden Datenpakets Pₙ, erzeugt der Niederfrequenz-Taktgeber NF in dieser Zeit mit einer um eine Frequenzabweichung Δf_{NF} in Höhe von 10 ppm von seiner Nennfrequenz f_{NF} = 32,768 kHz wegen Temperaturschwankungen abweichenden Frequenz insgesamt 327.683 Niederfrequenz-Takte T_{NF}, die der zweite Zähler des zweiten Timers Z2 registriert. Die CPU liest beide Zählerwerte aus und auf Grundlage eines Vergleichs der registrierten Niederfrequenz-Takte T_{NF} und Hochfrequenz-Takte T_{HF} stellt die CPU die Abweichung des Niederfrequenz-Taktgebers NF von 3 Takten fest.

Um Energie zu sparen, wechselt der gezeigte Knoten K außerhalb der Übertragungszeit, d.h. während der Wartezeit, von einem Aktivmodus in einen Schlafmodus, der bewirkt, dass der Hochfrequenz-Taktgeber HF und die Recheneinheit R des Knotens K nicht aktiv sind. Der Niederfrequenz-Taktgeber NF ist dabei durchgehend aktiv (vgl. Fig. 3).

Fig. 3 zeigt ein schematisches Diagramm der Drahtlosübertragung eines in Sub-Datenpakete SP₁, SP₂, SP₃ unterteilten ersten Telegramms T₁ und eines in Sub-Datenpakete SP₁, SP₂ unterteilten zweiten Telegramms T₁ zwischen dem Knoten K aus Fig. 1 und 2 und der Basisstation B aus Fig. 1 und unter Anwendung des wie nachstehend beschriebenen Verfahrens.

Das Diagramm ist in vier Unterdiagramme a) - d) unterteilt, die alle jeweils eine Zeitachse t mit Teilstrichen zu identischen Zeitpunkten τ₁, τ₂, ... τ₁₀ aufweisen, wobei die Zeitachse t nicht notwendigerweise zeitlich gleichmäßig beabstandete Teilstriche aufweist. Das Unterdiagramm a) zeigt Kurven für die Temperatur T und die Frequenzabweichung Δf_{NF} des Niederfrequenz-Taktgebers NF, wobei die Kurven zur vereinfachten Darstellung gegen eine gemeinsame Ordinate aufgetragen sind, die sowohl T [°C] als auch Δf_{NF} [Hz] beschreibt. Die Frequenzabweichung Δf_{NF} des Niederfrequenz-Taktgebers NF von seiner Nennfrequenz f_{NF} ist temperaturabhängig und folgt im Wesentlichen seiner Temperatur T. Das Unterdiagramm b) zeigt die zeitliche Abfolge der Übertragung des in drei Sub-Datenpakete SP₁, SP₂, SP₃ aufgeteilten ersten Telegramms T₁ und des in zwei Sub-Datenpakete SP₁, SP₂ aufgeteilten zweiten Telegramms T₂. Dabei kann die Übertragung des ersten Telegramms T₁ und des zweiten Telegramms T₂ jeweils entweder eine Downlink-Datenübertragung oder eine Uplink-Datenübertragung zwischen Knoten K und Basisstation B sein. Das Unterdiagramm c) zeigt die zeitliche Abfolge der während der Übertragung der Sub-Datenpakete SP₁, SP₂, SP₃ vom Hochfrequenz-Taktgeber HF abgegebenen Takte T_{HF} und das Unterdiagramm d) zeigt die zeitliche Abfolge der Niederfrequenz-Takte T_{NF}, die vom durchgehend aktiven Niederfrequenz-Taktgeber NF erzeugt werden.

Für das dargestellte Verfahren zur Verbesserung der Zeitgenauigkeit bei der Drahtlosübertragung ist vorgesehen, dass das erste bzw. das vorangehende Datenpaket Pᵥ durch das zeitlich letzte Sub-Datenpaket SP₃ des in Sub-Datenpakete SP₁, SP₂, SP₃ unterteilten ersten bzw. vorangehenden Telegramms T₁ gegeben ist und das nachfolgende Datenpaket Pₙ das zeitlich erste Sub-Datenpaket SP₁ des in Sub-Datenpakete SP₁, SP₂ unterteilten und dem vorangehenden Telegramm T₁ nachfolgenden Telegramms T₂ ist, d.h. vor dem Übertragen des nachfolgenden Datenpakets Pₙ erfolgt das Übertragen des ersten bzw. vorangehenden Datenpakets Pᵥ.

Für die Dauer der Übertragung jedes der (Sub-)Datenpakete SP₁, SP₂, SP₃ ist der Hochfrequenz-Taktgeber HF, der eine Nennfrequenz f_{HF} = 39 MHz aufweist, aktiv und erzeugt Hochfrequenz-Takte T_{HF}, d.h. insbesondere während der ersten Zeitdauer t₁ = τ₆ - τ₅, die in diesem Beispiel 10 ms beträgt.

Der Niederfrequenz-Taktgeber NF, der eine Nennfrequenz f_{NF} = 32,768 kHz aufweist, ist durchgehend aktiv und erzeugt Niederfrequenz-Takte T_{NF}, d.h. insbesondere auch während der zweiten Zeitdauer t₂ zwischen der Übertragung des vorangehenden Datenpakets Pᵥ und das nachfolgenden Datenpakets Pₙ, wobei die zweite Zeitdauer t₂ in diesem Beispiel 10 s beträgt.

Die Anzahl N_{NF} der erzeugten Niederfrequenz-Takte T_{NF} und die Anzahl N_{HF} der erzeugten Hochfrequenz-Takte T_{HF} werden durch den in Fig. 2 gezeigten Knoten K registriert.

Der in Fig. 2 gezeigte Knoten K bestimmt (wie auch zu Fig. 2 beschrieben) eine Taktkorrektur auf der Grundlage der registrierten Niederfrequenz-Takte T_{NF} und Hochfrequenz-Takte T_{HF}. Im gezeigten Beispiel ist die Frequenzabweichung Δf_{HF} des Hochfrequenz-Taktgebers HF von seiner Nennfrequenz f_{HF} vernachlässigbar. Die Anzahl N_{HF} der während der ersten Zeitdauer t₁ vom Hochfrequenz-Taktgeber HF erzeugten und vom Knoten K registrierten Hochfrequenz-Takte T_{HF} beträgt daher N_{HF} = t₁ × f_{HF} = 10 ms × 39 MHz = 390.000. Für die Anzahl N_{NF} der während der zweiten Zeitdauer t₂ vom Niederfrequenz-Taktgeber NF erzeugten Niederfrequenz-Takte T_{NF} gilt ${N}_{NF} = {t}_{2} \times {f}_{NF} + {\int }_{{τ}_{6}}^{{τ}_{7}} {Δf}_{NF} \left(t\right) dt$*,* wobei Δf_{NF}(*t*) die durch die Temperaturschwankung T während der Zeit t₂ zeitlich veränderliche Frequenzabweichung des Niederfrequenz-Taktgebers NF von seiner Nennfrequenz f_{NF} ist. Näherungsweise beträgt im vorliegenden Beispiel die Frequenzabweichung des Niederfrequenz-Taktgebers NF während der zweiten Zeitdauer t₂ konstant 10 ppm von seiner Nennfrequenz f_{NF}. Daher ist näherungsweise ${\int }_{{τ}_{6}}^{{τ}_{7}} {Δf}_{NF} \left(t\right) dt \approx 10 s \times 10 ppm \times 32,768 kHz = 3 , 2768$ und ${N}_{NF} = \left⌊10 s\times 32,768 kHz+3,2768=327.683,2768\right⌋ = 327.683$ (unter Beachtung, dass die Anzahl registrierter Takte ganzzahlig ist). Die Taktkorrektur ergibt damit eine Abweichung von 3 Takten.

Das Bestimmen der Übertragungszeit auf der Grundlage der bestimmten Taktkorrektur erfolgt dann unmittelbar bei Beginn des Übertragens des nachfolgenden Datenpakets Pₙ. Dadurch wird der Endzeitpunkt τ₈ um die bei der Taktkorrektur festgestellte Abweichung von 3 Takten verschoben. Auf diese Weise kann die durch Temperaturschwankungen ausgelöste Ungenauigkeit des Niederfrequenz-Taktgebers NF korrigiert werden.

Das gezeigte Verfahren kann sich in beliebig vielen Zyklen der Übertragung von Telegrammen wiederholen. Dabei kann das nachfolgende Datenpaket Pₙ eines vorangehenden Zyklus das vorangehende Datenpaket Pᵥ eines nachfolgenden Zyklus darstellen.

### BEZUGSZEICHENLISTE

- B: Basisstation
- CPU: Prozessor
- HF: Hochfrequenz-Taktgeber
- F: Funkmodul
- f_{HF}: Nennfrequenz des Hochfrequenz-Taktgebers
- Δf_{HF}: Frequenzabweichung des Hochfrequenz-Taktgebers
- f_{NF}: Nennfrequenz des Niederfrequenz-Taktgebers
- Δf_{NF}: Frequenzabweichung des Niederfrequenz-Taktgebers
- K: Knoten
- KS: Kommunikationssystem
- NF: Niederfrequenz-Taktgeber
- Pᵥ: erstes bzw. vorangehendes Datenpaket
- Pₙ: nachfolgendes Datenpaket
- Q_{HF}: Hochfrequenz-Quarzoszillator
- Q_{NF}: Niederfrequenz-Quarzoszillator
- R: Recheneinheit
- S: Speicher
- SP₁, SP₂, ... SPₙ: Sub-Datenpaket
- T_{HF}: Hochfrequenz-Takte
- T_{NF}: Niederfrequenz-Takte
- T₁, T₂: Telegramm
- t₁: erste Zeitdauer
- t₂: zweite Zeitdauer
- Z1: erster Timer
- Z2: zweiter Timer

## Patentansprüche

1. Verfahren zur Verbesserung der Zeitgenauigkeit bei der Drahtlosübertragung zwischen einem Knoten (K) und einer Basisstation (B) in einem Kommunikationssystem (KS), umfassend die Schritte
- Übertragen eines ersten Datenpakets (Pᵥ) zwischen dem Knoten (K) und der Basisstation (B);
- Erzeugen von Hochfrequenz-Takten (T_{HF}) während einer ersten Zeitdauer t₁ durch einen Hochfrequenz-Taktgeber (HF), der eine Nennfrequenz f_{HF} aufweist;
- Erzeugen von Niederfrequenz-Takten (T_{NF}) während einer zweiten Zeitdauer t₂, die länger ist als die erste Zeitdauer t₁, durch einen Niederfrequenz-Taktgeber (NF), der eine Nennfrequenz f_{NF} aufweist, die kleiner ist als die Nennfrequenz f_{HF} des Hochfrequenz-Taktgebers (HF);
- Registrieren der erzeugten Niederfrequenz-Takte (T_{NF}) und Hochfrequenz-Takte (T_{HF}) durch den Knoten (K) oder durch die Basisstation (B);
- Bestimmen einer Taktkorrektur auf der Grundlage der registrierten Niederfrequenz-Takte (T_{NF}) und/oder Hochfrequenz-Takte (T_{HF});
- Bestimmen einer Übertragungszeit, insbesondere Sendezeit und/oder Empfangszeit, auf der Grundlage der bestimmten Taktkorrektur.

2. Verfahren nach Anspruch 1, wobei das erste Datenpaket (Pᵥ) ein einem nachfolgenden Datenpaket (Pₙ) vorangehendes Datenpaket ist, und wobei das Verfahren ferner den Schritt umfasst:
- Übertragen des nachfolgenden Datenpakets (Pₙ) zwischen dem Knoten (K) und der Basisstation (B) auf Grundlage der bestimmten Übertragungszeit.

3. Verfahren nach Anspruch 2, wobei das Bestimmen der Übertragungszeit vor dem Übertragen des nachfolgenden Datenpakets (Pₙ) erfolgt.

4. Verfahren nach Anspruch 2, wobei das Bestimmen der Übertragungszeit während dem Übertragen des nachfolgenden Datenpakets (Pₙ) erfolgt.

5. Verfahren nach einem der Ansprüche 2 - 4, wobei die zweite Zeitdauer t₂ zumindest der Dauer zwischen dem Übertragen des ersten Datenpakets (Pᵥ) und dem Übertragen des nachfolgenden Datenpakets (Pₙ) entspricht.

6. Verfahren nach Anspruch 5, wobei die zweite Zeitdauer t₂ zumindest der Summe entspricht aus
- der Dauer des Übertragens des ersten Datenpakets (Pᵥ); und
- der Dauer zwischen dem Übertragen des ersten Datenpakets (Pᵥ) und dem Übertragen des nachfolgenden Datenpakets (Pₙ).

7. Verfahren nach einem der vorangehenden Ansprüche, wobei die zweite Zeitdauer t₂ länger ist als die Dauer des Übertragens des ersten Datenpakets (Pᵥ).

8. Verfahren nach Anspruch 7, wobei die zweite Zeitdauer t₂ länger ist als ein 10-faches, bevorzugt ein 100-faches, besonders bevorzugt ein 1000-faches der Dauer des Übertragens des ersten Datenpakets (Pᵥ).

9. Verfahren nach einem der vorangehenden Ansprüche, wobei die zweite Zeitdauer t₂ zumindest derart lang ist, sodass t₂ ≥ (Δf_{NF} × f_{NF})⁻¹, wobei Δf_{NF} = 10 ppm × f_{NF}, bevorzugt Δf_{NF} = 5 ppm × f_{NF}, bevorzugter Δf_{NF} = 2 ppm × f_{NF}, besonders bevorzugt Δf_{NF} = 1 ppm × f_{NF}.

10. Verfahren nach einem der vorangehenden Ansprüche, wobei die erste Zeitdauer t₁ der Dauer des Übertragens des ersten Datenpakets (Pᵥ) entspricht.

11. Verfahren nach einem der vorangehenden Ansprüche, wobei das Übertragen der Datenpakete (Pᵥ, Pₙ) zwischen dem Knoten (K) und der Basisstation (B) auf einem vorgegebenen Primär-Frequenzband erfolgt, welches eine Bandbreite ≤ 500 kHz, bevorzugt ≤ 250 kHz, besonders bevorzugt ≤ 125 kHz, aufweist.

12. Verfahren nach einem der vorangehenden Ansprüche, wobei das Bestimmen der Taktkorrektur auf der Grundlage eines Vergleichens der vom Knoten (K) registrierten Niederfrequenz-Takte (T_{NF}) und Hochfrequenz-Takte (T_{HF}) erfolgt, durch welches Vergleichen eine Taktabweichung der Niederfrequenz-Takte (T_{NF}) bestimmt wird.

13. Verfahren nach einem der vorangehenden Ansprüche, wobei das Bestimmen einer Übertragungszeit umfasst, dass die Frequenz, mit der der Niederfrequenz-Taktgeber (NF) Niederfrequenz-Takte (T_{NF}) erzeugt, auf der Grundlage der bestimmten Taktkorrektur angepasst wird.

14. Verfahren nach einem der vorangehenden Ansprüche, wobei das Bestimmen der Übertragungszeit eine Verschiebung eines Anfangszeitpunkts und/oder Endzeitpunkts der Übertragungszeit, insbesondere eines Anfangszeitpunkts und/oder Endzeitpunkts der Sendezeit und/oder Empfangszeit, auf der Grundlage der bestimmten Taktkorrektur umfasst.

15. Verfahren nach einem der Ansprüche 2 - 14, wobei das vorangehende Datenpaket (Pᵥ) und das nachfolgende Datenpaket (Pₙ) aufeinanderfolgende Sub-Datenpakete (SP₁, SP₂, ... SPₙ) eines in Sub-Datenpakete (SP₁, SP₂, ... SPₙ) unterteilten Telegramms (T₁, T₂) sind.

16. Verfahren nach einem der vorangehenden 2 - 15, wobei das vorangehende Datenpaket (Pᵥ) ein letztes Sub-Datenpaket (SPₙ) eines in Sub-Datenpakete (SP₁, SP₂, ... SPₙ) unterteilten vorangehenden Telegramms (T₁) ist und das nachfolgende Datenpaket (Pₙ) ein erstes Sub-Datenpaket (SP₁) eines in Sub-Datenpakete (SP₁, SP₂, ... SPₙ) unterteilten und dem vorangehenden Telegramm (T₁) nachfolgenden Telegramms (T₂) ist.

17. Verfahren nach Anspruch 15 oder 16, wobei jedem der Sub-Datenpakete (SP₁, SP₂, ... SPₙ) eine Übertragungsfrequenz innerhalb eines vorgegebenen Primär-Frequenzbands zugeordnet ist und jedes der Sub-Datenpakete (SP₁, SP₂, ... SPₙ) mit der ihm jeweils zugeordneten Übertragungsfrequenz übertragen wird.

18. Verfahren nach einem der vorangehenden 2 - 17, wobei das vorangehende Datenpaket (Pᵥ) und das nachfolgende Datenpaket (Pₙ) jeweils mit einer sich zeitlich ändernden Übertragungsfrequenz innerhalb eines vorgegebenen Primär-Frequenzbands übertragen werden.

19. Knoten (K) zur Übertragung von Datenpaketen (Pᵥ, Pₙ) mit einer Basisstation (B) in einem Kommunikationssystem (KS), umfassend
- ein Funkmodul (F) zur Übertragung der Datenpakete (Pᵥ, Pₙ);
- eine Recheneinheit (R), die angepasst ist zum
- Registrieren von Niederfrequenz-Takten (T_{NF}) und Hochfrequenz-Takten (T_{HF});
- Bestimmen einer Taktkorrektur auf der Grundlage der registrierten Niederfrequenz-Takte (T_{NF}) und/oder Hochfrequenz-Takte (T_{HF});
- Bestimmen einer Übertragungszeit, insbesondere Sendezeit und/oder Empfangszeit, auf der Grundlage der bestimmten Taktkorrektur;
- Steuern des Funkmoduls (F) derart, dass ein Übertragen eines der Datenpakete (Pᵥ, Pₙ) zu der bestimmten Übertragungszeit, insbesondere an einem bestimmten Zeitpunkt zum Senden und/oder Empfangen, erfolgt.

20. Knoten (K) nach Anspruch 19, ferner umfassend
- einen Hochfrequenz-Taktgeber (HF) zur Erzeugung von Hochfrequenz-Takten (T_{HF}), welcher Hochfrequenz-Taktgeber (HF) eine Nennfrequenz f_{HF} aufweist;
- einen Niederfrequenz-Taktgeber (NF) zur Erzeugung von Niederfrequenz-Takten (T_{NF}), welcher Niederfrequenz-Taktgeber (NF) eine Nennfrequenz f_{NF} aufweist, die kleiner ist als die Nennfrequenz f_{HF} des Hochfrequenz-Taktgebers (HF).

21. Knoten (K) nach Anspruch 20, wobei der Knoten (K) eingerichtet ist zum Ausführen des Verfahrens nach einem der Ansprüche 1 - 18.

22. Knoten (K) nach einem der Ansprüche 19 - 21, wobei die Recheneinheit (R) ferner angepasst ist zum
- Unterteilen von Telegrammen (T₁, T₂) in Sub-Datenpakete (SP₁, SP₂, ... SPₙ).

23. Knoten (K) nach Anspruch 22, wobei die Recheneinheit (R) ferner angepasst ist zum
- Zuordnen jedem der Sub-Datenpakete (SP₁, SP₂, ... SPₙ) eine Übertragungsfrequenz innerhalb eines vorgegebenen Primär-Frequenzbands.

24. Knoten (K) nach einem der Ansprüche 19 - 23, wobei der Knoten (K) batteriebetrieben ist.

25. Kommunikationssystem (KS) umfassend eine Basisstation (B) und zumindest einen Knoten (K) nach einem der Ansprüche 19 - 24.
